(19) Europäisches Patentamt / European Patent Office / Office européen des brevets

(11) **EP 3 890 091 B1**

(12) **EUROPEAN PATENT SPECIFICATION**

(45) Date of publication and mention
of the grant of the patent:
**28.06.2023  Bulletin 2023/26**

(21) Application number: **21154519.9**

(22) Date of filing: **01.02.2021**

(51) International Patent Classification (IPC):
**H01M 10/0562** (2010.01)      **H01M 10/052** (2010.01)
**C01B 33/00** (2006.01)

(52) Cooperative Patent Classification (CPC):
**H01M 10/0562; C01B 33/24; H01M 10/052;**
H01M 2300/0068; Y02E 60/10

(54) **CRYSTALLINE SOLID ELECTROLYTE AND METHOD OF PRODUCING THE SAME**

KRISTALLINER FESTELEKTROLYT UND VERFAHREN ZUR HERSTELLUNG DAVON

ÉLECTROLYTE SOLIDE CRISTALLIN ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2020  JP 2020064562**

(43) Date of publication of application:
**06.10.2021  Bulletin 2021/40**

(73) Proprietor: **FUJITSU LIMITED
Kanagawa 211-8588 (JP)**

(72) Inventors:
• **Homma, Kenji
Kanagawa, 211-8588 (JP)**
• **Fushimi, Naoki
Kanagawa, 243-0003 (JP)**
• **Iwata, Jiyunichi
Kanagawa, 211-8588 (JP)**

(74) Representative: **Hoffmann Eitle
Patent- und Rechtsanwälte PartmbB
Arabellastraße 30
81925 München (DE)**

(56) References cited:
• NARAYANASAMY JANANI ET AL: "Influence of sintering additives on densification and Li + conductivity of Al doped Li 7 La 3 Zr 2 O 12 lithium garnet", RSC ADV., vol. 4, no. 93, 1 January 2014 (2014-01-01), pages 51228-51238, XP055542801, DOI: 10.1039/C4RA08674K
• MASATO SUMITA ET AL: "Li-Ion Conductive Li 3 PO 4 -Li 3 BO 3 -Li 2 SO 4 Mixture: Prevision through Density Functional Molecular Dynamics and Machine Learning", BULLETIN OF THE CHEMICAL SOCIETY OF JAPAN, vol. 92, no. 6, 26 April 2019 (2019-04-26) , pages 1100-1106, XP055735483, JP ISSN: 0009-2673, DOI: 10.1246/bcsj.20190041
• TATSUMISAGO M ET AL: "Structure and properties of lithium ion conducting oxysulfide glasses prepared by rapid quenching", SOLID STATE IONICS, NORTH HOLLAND PUB. COMPANY. AMSTERDAM; NL, NL, vol. 86-88, 1 July 1996 (1996-07-01), pages 487-490, XP004070080, ISSN: 0167-2738, DOI: 10.1016/0167-2738(96)00179-8

**Description**

FIELD

The embodiment discussed herein is related to a crystalline solid electrolyte and a method of producing the crystalline solid electrolyte.

BACKGROUND

For an environmental power generation technology by which electricity generated from minute energy such as solar energy, vibration energy, and body temperatures of human and animal is stored and utilized for a sensor, wireless transmission power, and the like, secondary batteries that are safe and highly reliable in any environment on the globe are demanded.

Among secondary batteries, an all-solid-state battery in which all elemental materials are made into a solid state has been attracting attention because there is no possibility of liquid leakage, ignition, or the like. Usually, in the all-solid-state battery, compared to a second battery using a liquid electrolyte, an internal resistance value of the battery is likely to increase and a large current is difficult to extract.

For example, causes of the increase in the internal resistance value of a bulk-type all-solid-state battery include (1) resistance at a contact interface between particles of a solid electrolyte (grain-boundary resistance), (2) an interface between an electrode material and the solid electrolyte (electrode interface resistance), (3) resistance in the particles of the solid electrolyte (bulk resistance), and the like.

To reduce these internal resistance values of the bulk-type all-solid-state battery, for example, a method of producing an all-solid-state battery has been proposed. This method includes laminating a positive electrode sheet having powder of a solid electrolyte and a positive electrode active material, an electrolyte sheet having powder of the solid electrolyte, and a negative electrode sheet having powder of the solid electrolyte and a negative electrode active material and firing the laminate at a temperature higher than or equal to a sintering temperature of the solid electrolyte.

For example, to improve the above-described (3) resistance in the particles of the solid electrolyte (bulk resistance), it has been proposed to use a glass material having predetermined characteristics as a solid electrolyte.

Related art is disclosed in Japanese Laid-open Patent Publication No. 2016-192370 and Japanese Laid-open Patent Publication No. 2017-27867.

Furthermore, Janani et al. (RSC Adv. 2014, 4, 51228-51238) report on the effect of $Li_3PO_4$, $Li_4SiO_4$ or $Li_3BO_3$ as a sintering additive on the densification and $Li^+$ conductivity of Al-doped $Li_7La_3Zr_2O_{12}$.

Sumita et al. (Bull. Chem. Soc. Jpn. 2019, 92, 1100-1106) report on the use of a ternary system of $Li_3PO_4$, $Li_4SiO_4$ and $Li_3BO_3$ in a solid electrolyte.

Tatsumisago et al. (Solid State Ionics 1996, 86-88, 487-490) report on the structure and properties of lithium ion conducting oxysulfide glasses which may contain one of $Li_3PO_4$, $Li_4SiO_4$ and $Li_3BO_3$.

SUMMARY

In one aspect, an object of the present disclosure is to provide a crystalline solid electrolyte able to sufficiently decrease internal resistance and a method of producing the crystalline solid electrolyte.

In one embodiment, a crystalline solid electrolyte includes $Li_3PO_4$, $Li_4SiO_4$, and $Li_3BO_3$. In this crystalline solid electrolyte, a content of the $Li_3PO_4$ is less than or equal to 75 mole%, based on the whole crystalline solid electrolyte.

In one embodiment, a method of producing a crystalline solid electrolyte includes mixing $Li_3PO_4$, $Li_4SiO_4$, and $Li_3BO_3$ such that content of the $Li_3PO_4$ is less than or equal to 75 mole%, based on the whole crystalline solid electrolyte, and crystallizing the $Li_3PO_4$, the $Li_4SiO_4$, and the $Li_3BO_3$ that have been mixed with each other.

As one aspect, a crystalline solid electrolyte able to sufficiently decrease internal resistance may be provided.

As one aspect, a method of producing a crystalline solid electrolyte able to sufficiently decrease internal resistance may be provided.

BRIEF DESCRIPTION OF DRAWINGS

FIG. 1 is a schematic diagram of a ternary diagram of $Li_3PO_4$, $Li_4SiO_4$, and $Li_3BO_3$.
FIG. 2 is a graph illustrating examples of results of a differential thermal analysis (DTA) for #1 to #15.
FIG. 3 is a graph illustrating examples of results of X-ray diffraction measurement for #1 to #15.
FIG. 4 is a graph illustrating an example of a result of X-ray diffraction measurement related to measurement of degree of crystallinity in #5.

FIG. 5 is a ternary diagram illustrating examples of the relationships between a first crystallization temperature and a composition ratio (content) of #1 to #15.

FIG. 6 is a ternary diagram illustrating examples of the relationships between conductivity and the composition ratio (content) of #1 to #15.

FIG. 7 is a ternary diagram illustrating the other examples of the relationships between the conductivity and the composition ratio (content) of #1 to #15.

FIG. 8A is a photograph illustrating an example of a result of reducing property evaluation by using a solid electrolyte $Li_{1.4}Al_{0.6}Ge_{1.4}(PO_4)_3$ (LAGP).

FIG. 8B is a photograph illustrating an example of a result of the reducing property evaluation by using a specimen (crystalline solid electrolyte) #5.

FIG. 9 is a schematic diagram in which the ternary diagrams illustrated in FIGs. 5, 6, and 7 are disposed in an xy plane.

DESCRIPTION OF EMBODIMENTS

In a dedicated study made by the inventors, when heat treatment was performed to crystallize a solid electrolyte in the manufacture of a bulk-type all-solid-state battery, there was a problem in that, in some cases, an electrode material was decomposed or solid-solved with the solid electrolyte at an interface with the solid electrolyte, and desired performance was not obtained.

For example, the inventors have found through the study that, in some cases, when heat treatment was performed at a temperature higher than or equal to a crystallization temperature Tc of the solid electrolyte to improve the ion conductivity of the solid electrolyte, the electrode material was decomposed or solid-solved with the solid electrolyte, and the internal resistance was unable to be decreased.

In the present disclosure, decomposition of an electrode material means that an electrode material is decomposed into a plurality of ingredients. Solid solution of an electrode material with a solid electrolyte means a state in which the electrode material is mixed with the solid electrolyte in a solid state.

The electrode material is not particularly limited as long as the electrode material is, for example, a material used for a positive electrode and a negative electrode used for an all-solid-state battery of related art and may be appropriately selected in accordance with the purpose.

For the present disclosure, when the composition of a solid electrolyte was optimized by an Ising model equation by using a digital annealer that is an Ising machine of a simulated annealing method, a composition containing $Li_3PO_4$, $Li_4SiO_4$, $Li_3BO_3$ was found, and the disclosed technique has been completed.

Based on the obtained findings, the following verification experiment was performed to study a crystalline solid electrolyte actually containing $Li_3PO_4$, $Li_4SiO_4$, and $Li_3BO_3$.

<Verification Experiment>

[Measurement of Crystallization Temperature Tc and Measurement of X-ray Diffraction]

Regarding crystallization performed to improve the ion conductivity of a solid electrolyte, the crystallization temperature Tc and the X-ray diffraction of the solid electrolyte containing $Li_3PO_4$, $Li_4SiO_4$, and $Li_3BO_3$ were measured.

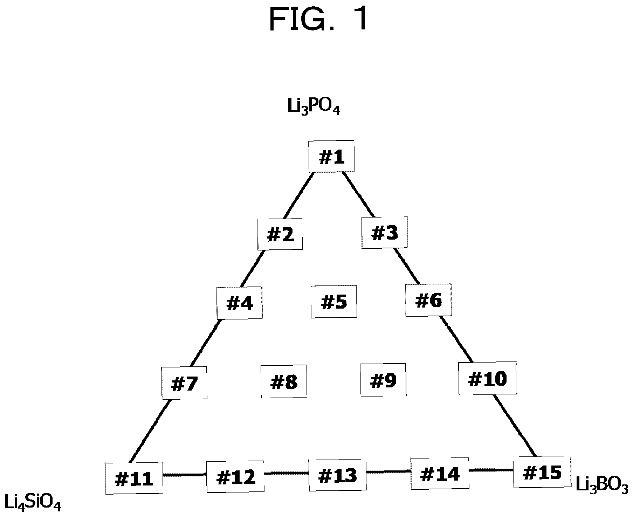

First, specimens #1 to #15 in which $Li_3PO_4$, $Li_4SiO_4$, and $Li_3BO_3$ (each made by Toshima Manufacturing Co., Ltd.) were weighed in molar ratio so as to have composition ratios (mole%, content) presented in Table 1 below and a ternary diagram in FIG. 1 were mixed under the following ball mill conditions.

- Mixing Conditions -

- Planetary ball mill
- 45 mL pod: ZrOz
- 5 mm-ball: 170 balls
- Rotation speed: 400 rpm
- Mixing time: 48 hours
- Atmosphere: Ar atmosphere
- Specimen amount: less than or equal to 1 g

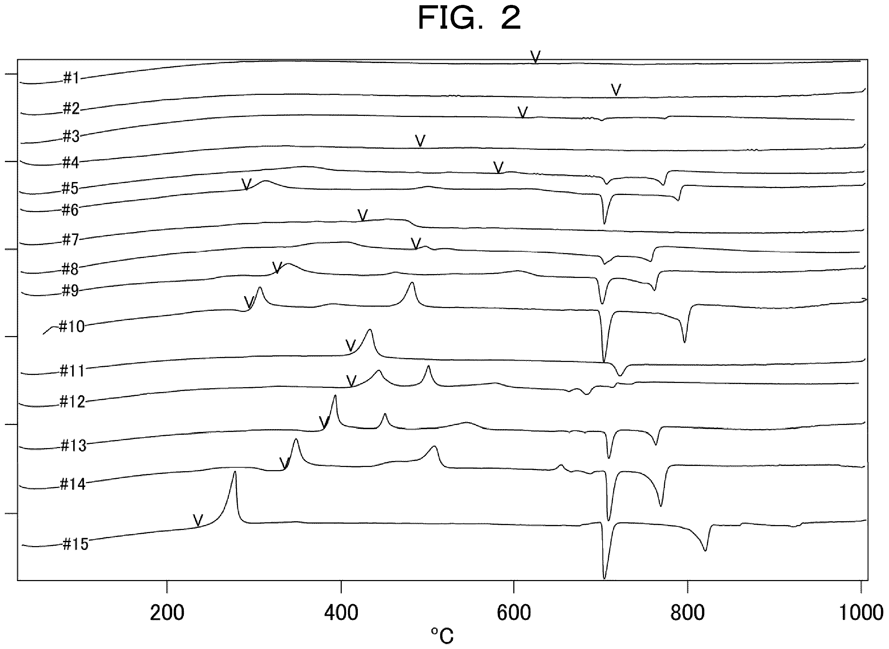

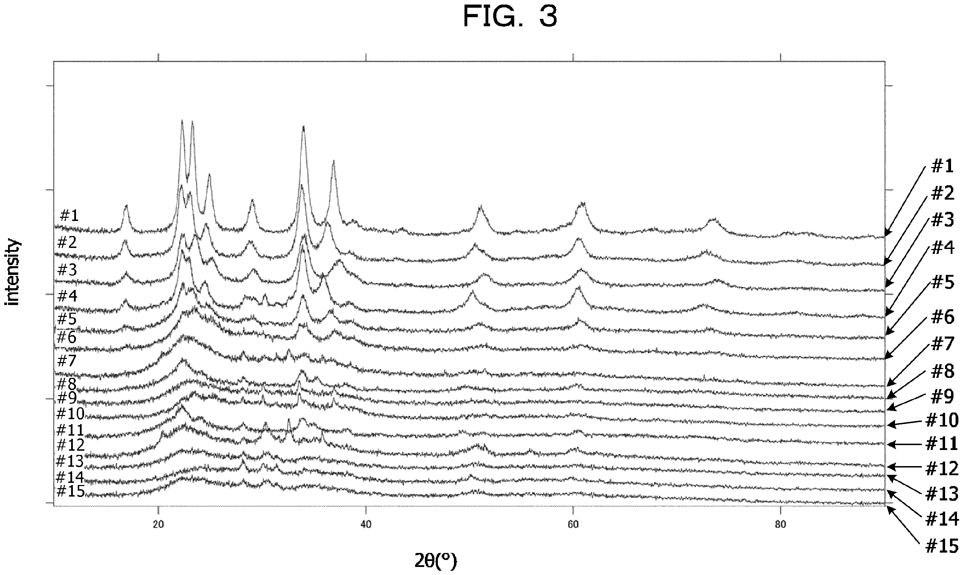

Next, a differential thermal analysis (DTA) and X-ray diffraction measurement were performed on the obtained specimens under the following conditions. The results of the obtained differential thermal analysis (DTA) are presented in Table 1 and FIG. 2, and the results of the X-ray diffraction measurement are presented in FIG. 3.

In the present disclosure, when a plurality of exothermic peaks of crystallization measured in the differential thermal analysis (DTA) are generated, crystallization temperatures are referred to as a first crystallization temperature Tc1, a second crystallization temperature Tc2, and so forth from the lowest temperature. In FIG. 2, "v" marks indicate positions (temperatures) where the first crystallization temperatures Tc1 of the respective specimens are measured.

- Conditions for Differential Thermal Analysis (DTA) -

- Measurement device: Rigaku TG8120
- Temperature increase speed: 10°C/min
- Range of measurement temperature: 25 to 1,000°C
- Atmosphere: Ar atmosphere

- Conditions for X-ray Diffraction Measurement -

- Measurement device: Rigaku Miniflex 600
- Radiation source: CuKa
- Measurement range: 3 to 90°
- Ratio: 10°/min

[Table 1]

| No. | $Li_3PO_4$ (mole%) | $Li_4SiO_4$ (mole%) | $Li_3BO_3$ (mole%) | First crystallization temperature Tc1 (°C) |
|---|---|---|---|---|
| #1 | 100 | 0 | 0 | 651 |
| #2 | 75 | 25 | 0 | 744 |
| #3 | 75 | 0 | 25 | 616 |
| #4 | 50 | 50 | 0 | 515 |
| #5 | 50 | 25 | 25 | 585 |
| #6 | 50 | 0 | 50 | 288 |
| #7 | 25 | 75 | 0 | 420 |
| #8 | 25 | 50 | 25 | 345 |
| #9 | 25 | 25 | 50 | 315 |
| #10 | 25 | 0 | 75 | 293 |
| #11 | 0 | 100 | 0 | 403 |
| #12 | 0 | 75 | 25 | 408 |
| #13 | 0 | 50 | 50 | 376 |
| #14 | 0 | 25 | 75 | 331 |
| #15 | 0 | 0 | 100 | 239 |

As illustrated in FIG. 2, it has been measured that specimens #1 to #15 each have the crystallization temperature in the measurement temperature range of 25°C to 1,000°C. As illustrated in FIG. 3, it has been confirmed that the specimens #1 to #15 each have a peak due to the X-ray diffraction and have a crystal structure. In FIG. 3, the left end indicates 3°.

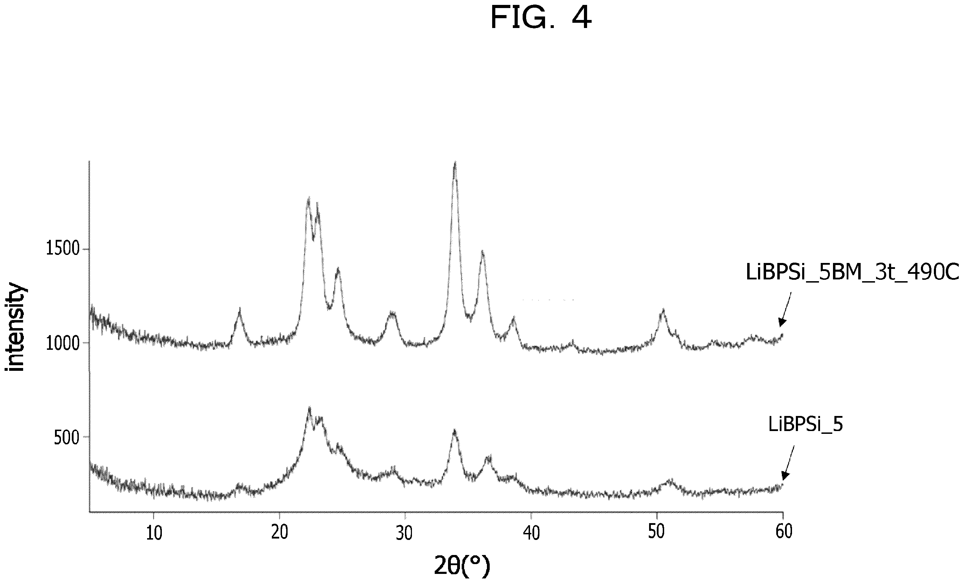

Next, the specimen (crystalline solid electrolyte) #5 after mixing by using a ball mill similar to that described above was heated to a Tg glass transition point (490°C) existing before the first crystallization temperature of the specimen #5 and maintained for one hour. After that, annealing treatment for maintaining at the temperature of 640°C for one hour was performed. Then, natural cooling to room temperature was performed, and the obtained specimen was subjected to X-ray diffraction measurement under the following conditions. The integrated intensities at a true crystal peak (crystalline portion) and an amorphous peak (amorphous portion) obtained from the measurement were calculated by using X-ray analysis software PDXL2 (made by Rigaku Corporation). The degree of crystallinity was calculated from the calculated integrated intensities. The results are presented in Table 2 and FIG. 4.

As a control experiment, the degree of crystallinity of the specimen (crystalline solid electrolyte) #5 after mixing by using a ball mill similar to that used for the above-described vitrification was similarly measured without the heat treatment. The measurement results are presented in Table 2 and FIG. 4.

- X-ray Diffraction Measurement Conditions -

- Experimental environment: atmosphere dry room, 23°C
- Dew point: -76°C
- Device name: Rigaku Miniflex 600
- Radiation source: Cu
- Measurement range: $2\theta$ = 5 to 90°

[Table 2]

|  | #5 (Crystallization, with annealing treatment) | Control experiment (amorphization) |
| --- | --- | --- |
| Integrated intensity of amorphous peak | 65.3 | 234 |
| Integrated intensity of true crystal peak | 768 | 600 |
| Degree of crystallinity (%) | 92.2 | 71.9 |

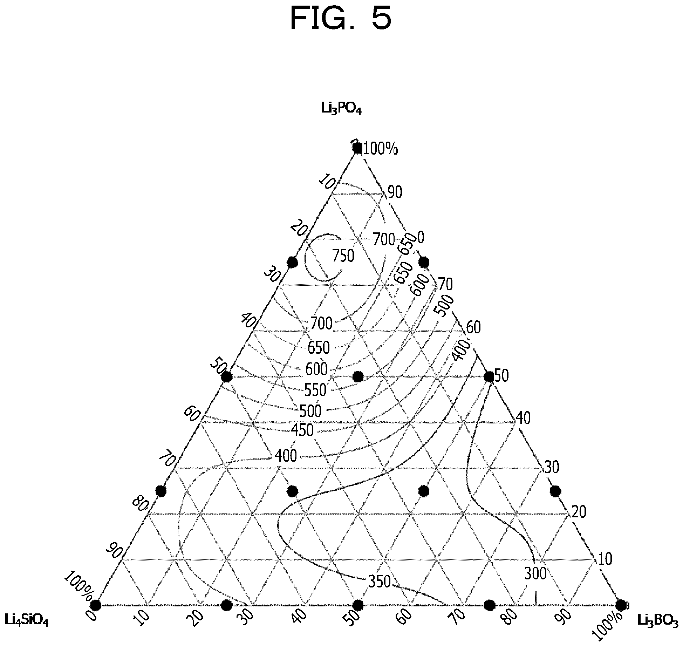

FIG. 5 illustrates a ternary diagram representing the relationships between the first crystallization temperature and the composition ratio (content). FIG. 5 is created based on the results presented in Table 1, FIG. 1, and FIG. 2. Black dots in FIG. 5 are points indicating the positions corresponding to specimens #1 to #15 in FIG. 1.

As illustrated in FIG. 5, a composition range of the solid electrolyte in which the solid electrolyte is able to be crystallized at a temperature lower than or equal to a temperature at which decomposition or solid solution of the electrode material is able to occur was successfully found. For example, it has been found that the first crystallization temperature Tc1 is lower than or equal to about 600°C in a composition range of #3 to #15 in which the content of the $Li_3PO_4$ is less than or equal to 75 mole%.

From this, it has been found that, when the content of the $Li_3PO_4$ is less than or equal to 75 mole% in the crystalline solid electrolyte containing $Li_3PO_4$, $Li_4SiO_4$, and $Li_3BO_3$, the first crystallization temperature Tc1 is able to lower than or equal to a usual temperature at which decomposition or solid solution of the electrode material is able to occur.

[Measurement of Conductivity]

Next, to examine the ion conductivity, the conductivity was measured by using powders (crystalline solid electrolytes) of specimens #1 to #15 after differential calorimetry.

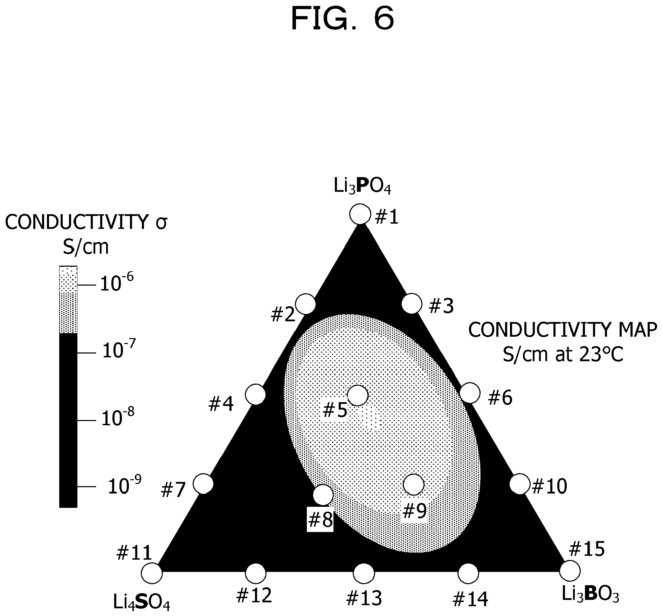

First, each of powders specimens #1 to #15 that weighs 0.5 g was pressed by a uniaxial molding machine so as to be molded into a pellet having a thickness of 0.4 mm and a diameter of 10 mm. The molded pellets were heated while being subjected to a dry argon flow and held in a range from 700 to 1,000°C for 12 hours. After being held in the heated state, the pellets were naturally cooled to room temperature to prepare conductivity measurement pellets #1 to #15. Au was evaporated, to a thickness of 240 nm, onto both surfaces of each of the prepared conductivity measurement pellets #1 to #15, and an amperometric response was measured by applying 1 to 50 mV in a range of 1 MHz to 100 Hz by an alternating current (AC) impedance method. The measurement atmosphere in the AC impedance method was a dry argon flow at room temperature of 23°C and 300°C. As an evaluation device, a frequency response analyzer incorporated in a VMP-300 multichannel electrochemical measurement system made by Bio-Logic Science Instruments is used. The measurement results are presented in Table 3 and FIG. 6.

[Table 3]

| No. | Conductivity $\sigma$ (S/cm, 23°C) |
|-----|-----------|
| #1  | 1.00E-11 |
| #2  | 2.30E-08 |
| #3  | 2.30E-10 |
| #4  | 5.20E-09 |
| #5  | 1.60E-06 |
| #6  | 8.50E-11 |
| #7  | 5.30E-10 |
| #8  | 3.10E-07 |
| #9  | 9.90E-07 |
| #10 | 3.70E-12 |
| #11 | 6.40E-12 |
| #12 | 4.60E-11 |
| #13 | 1.20E-11 |
| #14 | 5.90E-12 |
| #15 | 1.00E-12 |

From the results in Table 3 and FIG. 6, all of the conductivity measurement pellets #1 to #15 exhibit ion conductivity. For example, it has been found that the conductivity measurement pellets #5, #8, and #9 exhibit good ion conductivity.

Usually, crystallization of the solid electrolyte is performed at higher than or equal to 600°C in many cases.

The inventors have found that, when at least the first crystallization temperature Tc1 of the solid electrolyte is lower than or equal to about 600°C, it is possible to crystallize the solid electrolyte and improve the ion conductivity without causing an abnormality in the positive electrode material in heat treatment performed on the positive electrode material and the solid electrolyte.

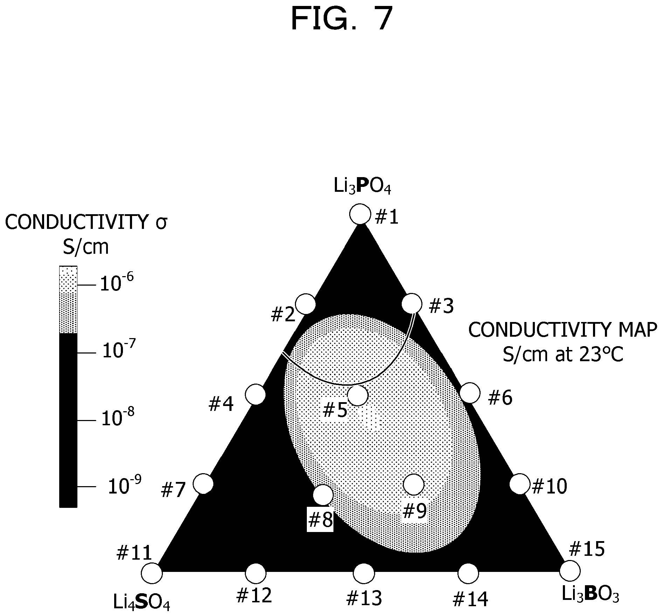

FIG. 7 is a diagram in which a curve of the first crystallization temperature of 600°C in FIG. 5 is superimposed on FIG. 6. As illustrated in FIG. 7, it has been confirmed that a solid electrolyte exhibiting ion conductivity is able to be obtained in a region where the first crystallization temperature Tc1 is lower than or equal to 600°C. For example, it has been found that #5, #8, and #9 are able to be crystallized at temperatures that do not affect the electrode material and exhibit good ion conductivity.

[Evaluation of Reducing Properties for Li Metal]

Next, a reducing properties for Li metal were evaluated by using powders of specimens (crystalline solid electrolytes) #1 to #15 after differential calorimetry.

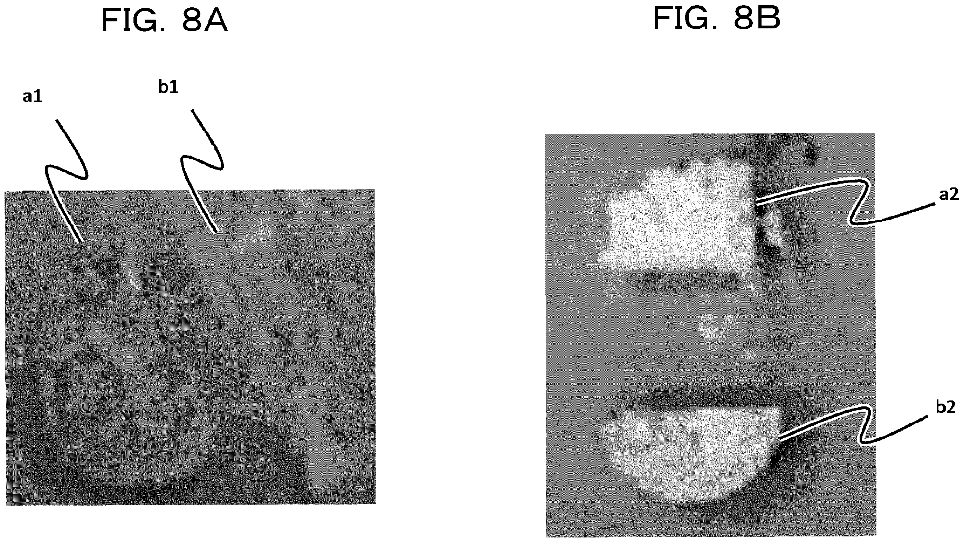

Powders of the specimens #1 to #15 were applied to entire semi-circular surfaces of respective 0.8 cm-diameter Li metal plates having semi-circular surfaces (0.25 cm$^2$) such that the weight of each of the specimens #1 to #15 is 40 mg/cm$^2$, and the powders of the specimens #1 to #15 were brought into contact with the respective semi-circular surfaces at a pressure of 2,000 N/m$^2$ for 24 hours. Then, the color (signal intensities) of contact portions after contact under the following conditions was measured by using image processing software. A photograph of specimen #5 having been subjected to the reducing property evaluation is illustrated in FIG. 8B. Whether discoloration occurred was determined by converting obtained photographs into grayscale images by using image analysis software (ImageJ) and comparing an average value of the signal intensities of each of the Li metal plates before the contact with a corresponding one of the specimens (a region other than the contact portion) with an average value of the signal intensities of the Li metal plate after the contact with the specimen (a region of the contact portions). The degree of discoloration (%) in specimen #5 obtained by the following expression was 7%: degree of discoloration (%) = {(average value of signal intensities of Li metal plate before contact with specimen (region other than contact portion) - average value of signal intensities of Li metal plate after contact with specimen (region of contact portion))/(average value of signal intensities of Li metal plate before contact with specimen (region other than contact portion)} × 100.

As a control experiment, a similar experiment was performed on a solid electrolyte $Li_{1.4}Al_{0.6}Ge_{1.4}(PO_4)_3$ (LAGP). A photograph of a specimen having undergone the reducing property evaluation is illustrated in FIG. 8A. The degree of discoloration (%) in the control experiment was 64%.

-Contact Conditions-

- Atmosphere dry room
- Dew point: -76°C
- Pressure: 5 gf (2,000 N/m$^2$)
- Contact time: 24 hours

FIG. 8A is a photograph illustrating a result of the reducing property evaluation with the solid electrolyte $Li_{1.4}Al_{0.6}Ge_{1.4}(PO_4)_3$ (LAGP) of the control experiment. In FIG. 8A, a1 indicates a region of the Li metal plate not having been in contact with the solid electrolyte (LAGP), and b1 indicates a region of the Li metal plate having been in contact with the solid electrolyte (LAGP). As illustrated in FIG. 8A, with the solid electrolyte LAGP of the control experiment, discoloration from white to gray occurred in b1, and reduction by the Li metal was visually observed.

FIG. 8B is a photograph illustrating a result of the reducing property evaluation with specimen #5 (crystalline solid electrolyte). In FIG. 8B, a2 indicates a region not having been in contact with specimen #5 (crystalline solid electrolyte), and b2 indicates a region having been in contact with specimen #5 (crystalline solid electrolyte). As illustrated in FIG. 8B, with specimen #5 (crystalline solid electrolyte), almost no discoloration was visually observed in b2, and it has been found that reduction-resistant properties for the Li metal is provided.

Although only the reducing property evaluation with specimen #5 is illustrated in FIG. 8B, similarly to the case with specimen #5, discoloration due to contact with the Li metal plate was not visually observed with specimens #1 to #4 and #6 to #15, either. Thus, it has been found that each of specimens #1 to #15 (crystalline solid electrolytes) has reduction-resistant properties.

With each of specimens #1 to #4 and #6 to #15, the degree of discoloration (%) is less than or equal to 10%, and it has been found that these specimens have good reduction-resistant properties.

The present inventors have performed the verification experiment for the crystalline solid electrolyte containing $Li_3PO_4$, $Li_4SiO_4$, and $Li_3BO_3$, and as a result, have successfully confirmed that the same result as the finding optimized by the Ising model equation by using the digital annealer is obtained.

The inventors have also found that, since such a crystalline solid electrolyte exhibits good ion conductivity, the internal resistance of an all-solid-state battery may be sufficiently decreased, and the reduction-resistant properties are good also for Li metal that may be used as electrodes of the all-solid-state battery.

The present disclosure has been completed based on the above findings.

(Crystalline Solid Electrolyte)

The disclosed solid electrolyte is a crystalline solid electrolyte.

The disclosed crystalline solid electrolyte contains $Li_3PO_4$, $Li_4SiO_4$, and $Li_3BO_3$, and the content of the $Li_3PO_4$ is less than or equal to 75 mole%.

In the disclosed technique, a crystalline solid electrolyte means a solid electrolyte having a crystalline substance in which constituent atoms and molecules are regularly arranged in a three-dimensional manner.

A method of confirming that a solid electrolyte is a crystalline solid electrolyte is not particularly limited and may be appropriately selected in accordance with the purpose. Examples of this method include, for example, an X-ray diffraction measurement. It is possible to confirm whether a crystal structure is provided by detecting a peak by the X-ray diffraction measurement.

The degree of crystallinity of the crystalline solid electrolyte is not particularly limited as long as the performance as the solid electrolyte is able to be exhibited and may be appropriately selected in accordance with the purpose. For example, the degree of crystallinity is preferably higher than or equal to 80%, more preferably, higher than or equal to 90%, and particularly preferably, higher than or equal to 95%. When the degree of crystallinity is higher than or equal to 80%, the ion conductivity may be improved.

Examples of a method for measuring the degree of crystallinity include a method in which, from an integrated intensity A of an amorphous peak (amorphous portion) and an integrated intensity B of a crystal peak (crystalline portion) obtained by X-ray diffraction measurement under the following measurement conditions, an expression (B/A + B) $\times$ 100) is calculated by X-ray analysis software.

- X-ray Diffraction Measurement Conditions -

- Experimental environment: atmosphere dry room, 23°C
- Dew point: -76°C
- Device Name: Rigaku Miniflex 600
- Radiation source: Cu
- Measurement range: $2\theta$ = 5 to 90°

The crystallization temperature Tc of the disclosed crystalline solid electrolyte is preferably lower than or equal to 600°C. When the crystallization temperature Tc is lower than or equal to 600°C, decomposition of the electrode material or solid solution of the electrode material with the solid electrolyte may be suppressed, and accordingly, the internal resistance may be sufficiently decreased.

The crystallization temperature Tc is able to be measured based on an exothermic peak of crystallization measured by differential thermal analysis (DTA) under the following conditions. In the present disclosure, when a plurality of exothermic peaks of crystallization are generated, the crystallization temperatures may be referred to as the first crystallization temperature Tc1, the second crystallization temperature Tc2, and so forth from the lowest temperature.

- Conditions of Differential Thermal Analysis (DTA) -

- Measurement device: Rigaku TG8120
- Temperature increase speed: 10°C/min
- Range of measurement temperature: 25°C to 1,000°C
- Atmosphere: Ar atmosphere

- Conditions for X-ray Diffraction Measurement -

- Measurement device: Rigaku Miniflex 600
- Radiation source: CuKa
- Measurement range: 3 to 90°
- Ratio: 10°/min

Regarding the crystallization temperature Tc, the first crystallization temperature Tc1 is preferably lower than or equal to 600°C. As long as the crystallization temperature Tc is lower than or equal to 600°C, a crystalline solid electrolyte of which not only the first crystallization temperature Tc1 but also the second crystallization temperature Tc2, the third crystallization temperature Tc3, and so forth are lower than or equal to 600°C is usable depending on the purpose.

The content of the $Li_3PO_4$ in the disclosed crystalline solid electrolyte is less than or equal to 75 mole%, preferably in a range satisfying the following conditions, more preferably less than or equal to 70 mole%, and even more preferably less than or equal to 50 mole%. The content of the $Li_3PO_4$ in the disclosed crystalline solid electrolyte is preferably greater than or equal to 25 mole% and, more preferably, greater than or equal to 40 mole%. When the content of the $Li_3PO_4$ in the crystalline solid electrolyte is less than or equal to 75 mole%, a solid electrolyte exhibiting good ion conductivity may be obtained, and accordingly, the internal resistance in the all-solid-state battery may be sufficiently decreased. When the content of the $Li_3PO_4$ in the crystalline solid electrolyte is less than or equal to 75 mole%, good reduction-resistant properties for Li metal may be exhibited.

<Conditions Regarding the Content of $Li_3PO_4$>

When the content of $Li_3PO_4$ is 100 $\times$ (2/√3) y (mole%),

in the relationship with x (0 $\le$ x $\le$1),

(1) in the case where $0 \leq x < 0.287$, y satisfies $0 \leq y \leq \sqrt{3}x$,
(2) in the case where $0.287 \leq x \leq 0.630$, y satisfies $0 \leq y \leq 42.857x^4 - 70.269x^3 + 45.484x^2 - 13.749x + 2.0681$, and
(3) in the case where $0.630 < x \leq 1$, y satisfies $0 \leq y \leq -\sqrt{3}x + \sqrt{3}$.

The above-described "conditions regarding the content of $Li_3PO_4$" are described in more detail with reference to the drawing.

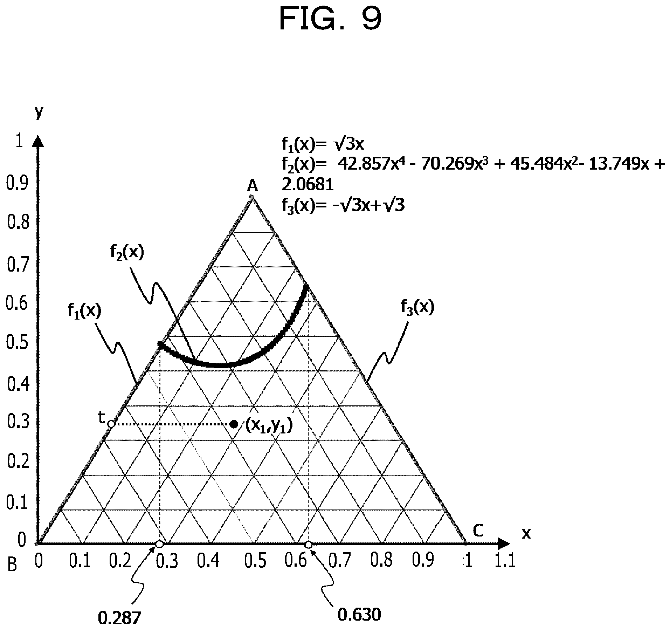

FIG. 9 is a diagram illustrating the case where a regular triangle ABC the length of the sides of which is 1 is disposed in an xy plane such that a point B is positioned at the origin and a side BC is superposed on the x axis. Hereinafter, when represented as (x, y), x is an x coordinate in the xy plane, and y is a y coordinate in the xy plane.

Since a side AB is a straight line passing through the origin and $(1/2, \sqrt{3}/2)$, a function $f_1(x)$ representing the side AB is given by the following equation.

$$f_1(x) = \sqrt{3}x$$

(where $0 \leq x \leq 0.5$).

Next, since a side AC is a straight line passing through $(1/2, \sqrt{3}/2)$ and $(1, 0)$, a function $f_3(x)$ representing the side AC is given by the following equation.

$$f_3(x) = -\sqrt{3}x + \sqrt{3}$$

(where $0.5 \leq x \leq 1$).

FIG. 9 is able to be regarded as a schematic diagram in which the ternary diagrams illustrated in, for example, FIGs. 5, 6, and 7 are disposed in the xy plane. For example, in FIG. 9, A, B, and C are able to be respectively regarded as "$Li_3PO_4$", "$Li_4SiO_4$", and "$Li_3BO_3$".

As described above, as a result of the verification experiment for the crystalline solid electrolyte containing $Li_3PO_4$, $Li_4SiO_4$, and $Li_3BO_3$, the $Li_3PO_4$ is preferably contained such that the first crystallization temperature Tc1 is lower than or equal to 600°C.

A region where the first crystallization temperature Tc1 is lower than or equal to 600°C is discussed.

From FIG. 5, the region where the first crystallization temperature Tc1 is lower than or equal to 600°C is able to be represented by the x axis, the function $f_1(x)$, the function $f_3(x)$, and a function $f_2(x)$ that represents a curve on which the first crystallization temperature Tc1 is 600°C in FIG. 9.

The function $f_2(x)$ that represents the curve on which the first crystallization temperature Tc1 is 600°C is represented by the following equation. A range of x that the function $f_2(x)$ is able to take is obtained from the function $f_1(x)$, the function $f_2(x)$, and the function $f_3(x)$.
$f_2(x) = 42.857x^4 - 70.269x^3 + 45.484x^2 - 13.749x + 2.0681$ (where $0.287 \leq x \leq 0.630$).

In the schematic diagram (regular triangle ABC) illustrated in FIG. 9 in which the ternary diagrams are disposed in the xy plane, the composition ratio of "$Li_3PO_4$" is able to be represented by a length from a point B to a point t where the y coordinate on a straight line AB is $y_1$ by using $y_1$ of a certain composition $(x_1, y_1)$. For example, since the triangle ABC is a regular triangle, angle ABC = 60°, and the length of the line segment Bt is able to be represented as $(2/\sqrt{3})y_1$ (because the line segment Bt = $y_1/\sin 60°$).

Accordingly, the composition ratio of "$Li_3PO_4$" in the region where the first crystallization temperature Tc1 is lower than or equal to 600°C (an usual temperature at which decomposition or solid solution of the electrode material occurs) is able to be represented as $(2/\sqrt{3})y$ in the schematic diagram (regular triangle ABC) in which the ternary diagrams are disposed in the xy plane. However, this is true only when y satisfies the following conditions (1) to (3).

(1) When $0 \leq x < 0.287$, $0 \leq y \leq \sqrt{3}x$ is satisfied,
(2) when $0.287 \leq x \leq 0.630$, $0 \leq y \leq 42.857x^4 - 70.269x^3 + 45.484x^2 - 13.749x + 2.0681$ is satisfied, and
(3) when $0.630 < x \leq 1$, $0 \leq y \leq -\sqrt{3}x + \sqrt{3}$ is satisfied.

When the content of the $Li_3PO_4$ is in a range satisfying the conditions regarding the content of the $Li_3PO_4$, a solid electrolyte exhibiting good ion conductivity may be obtained, and accordingly, the internal resistance in the all-solid-state battery may be further decreased.

The total content of $Li_3PO_4$, $Li_4SiO_4$, and $Li_3BO_3$ is preferably greater than or equal to 95 mole% with respect to the entirety of the crystalline solid electrolyte.

The crystalline solid electrolyte may contain materials other than $Li_3PO_4$, $Li_4SiO_4$, and $Li_3BO_3$ in a range that does not hinder the performance according to the present disclosure.

The other materials are not particularly limited and may be appropriately selected in accordance with the purpose; examples of the other materials include, for example, an Na (sodium) source, an Mg (magnesium) source, a K (potassium) source, a Ca (calcium) source, a Ti (titanium) source, a V (vanadium) source, a Cr (chromium) source, an Mn (manganese) source, an Fe (iron) source, a Co (cobalt) source, an Ni (nickel) source, a Cu (copper) source, a Zn (zinc) source, a Ga (gallium) source, an Se (selenium) source, an Rb (rubidium) source, an S (sulfur) source, a Y (yttrium) source, a Zr (zirconium) source, an Nb (niobium) source, an Mo (molybdenum) source, an Ag (silver) source, an In (indium) source, an Sn (tin) source, an Sb (antimony) source, a Cs (cesium) source, a Ba (vanadium) source, an Hf (hafnium) source, a Ta (tantalum) source, a W (tungsten) source, a Pb (lead) source, a Bi (bismuth) source, an Au (gold) source, an La (lanthanum) source, an Nd (neodymium) source, an Eu (europium) source, and so forth. Each of these may be a single element or a compound such as an oxide. These may be used alone, or two or more of these may be used in combination.

The form of the crystalline solid electrolyte is not particularly limited and may be appropriately selected in accordance with the purpose. The crystalline solid electrolyte may be in the form of powder or pellets.

The structure of the crystalline solid electrolyte is not particularly limited and may be appropriately selected in accordance with the purpose.

Regarding physical properties of the crystalline solid electrolyte, the degree of discoloration measured under the following conditions is preferably lower than or equal to 10%, and more preferably, lower than or equal to 5%.

- Method and Conditions for Measuring Degree of Discoloration (%) -

Under the air atmosphere (dew point: -76°C), the specimen is applied to an entire semi-circular surface of an 0.8 cm-diameter Li metal plate having a semi-circular surface ($0.25 \text{ cm}^2$) such that the weight of the specimen is 40 $\text{mg/cm}^2$, and the specimen is brought into contact with the semi-circular surface at a pressure of 2,000 $\text{N/m}^2$ for 24 hours. Then, the color (signal intensity) of the Li metal plate in a contact portion of the Li metal plate is measured.

A method of measuring the color (signal intensity) of the Li metal plate is not particularly limited and may be appropriately selected in accordance with the purpose. Examples of this method include, for example, image processing software (for example, ImageJ).

When using image analysis software, an image of the Li metal plate is obtained, and the obtained image is converted into a grayscale image. Using an average value of the signal intensities of the Li metal plate before the contact with the specimen (region other than the contact portion) and an average value of the signal intensities of the Li metal plate after the contact with the specimen (region of the contact portion) in the image having been converted into the grayscale image, the degree of discoloration (%) is calculated by the following equation: degree of discoloration (%) = {(average value of signal intensities of Li metal plate before contact with specimen (region other than contact portion) - average value of signal intensities of the Li metal plate after contact with specimen (region of contact portion))/(average value of signal intensities of Li metal plate before contact with specimen (region other than contact portion))} $\times$ 100.

The crystalline solid electrolyte may be preferably used for a bulk-type all-solid-state secondary battery and may also be used for various applications. For example, the crystalline solid electrolyte may also be used for a thin-film-type all-solid-state battery.

As described above, the disclosed crystalline solid electrolyte contains $Li_3PO_4$, $Li_4SiO_4$, and $Li_3BO_3$, and the content of the $Li_3PO_4$ is less than or equal to 75 mole%. With this, in actual use, a solid electrolyte having sufficiently low internal resistance may be provided, and decomposition or solid solution of an electrode material due to heat treatment for crystallization of the solid electrolyte may be suppressed.

In addition, when the first crystallization temperature Tc1 of the disclosed crystalline solid electrolyte is lower than or equal to the temperature at which decomposition or solid solution of the electrode material occurs, the internal resistance may be further decreased.

(Method of Producing Crystalline Solid Electrolyte)

A disclosed method of producing a crystalline solid electrolyte includes mixing $Li_3PO_4$, $Li_4SiO_4$, and $Li_3BO_3$ such that the content of the $Li_3PO_4$ is less than or equal to 75 mole% and crystallizing the mixture.

The crystalline solid electrolyte is the disclosed crystalline solid electrolyte.

Examples of the method of mixing include, for example, mixing of $Li_3PO_4$, $Li_4SiO_4$, and $Li_3BO_3$ by using a planetary ball mill.

In the mixing, $Li_3PO_4$, $Li_4SiO_4$, and $Li_3BO_3$ are mixed such that the content of the $Li_3PO_4$ is less than or equal to 75 mole%.

A specific example of the method of mixing is, for example, as follows.

$Li_3PO_4$, $Li_4SiO_4$, and $Li_3BO_3$ are weighed in mol ratio such that the content of the $Li_3PO_4$ is less than or equal to 75 mole% and mixed under the following ball mill conditions to be vitrified.

- Mixing Conditions -

- Planetary ball mill
- 45 mL pod: $ZrO_2$
- 5 mm-ball: 170 balls
- Rotation speed: 400 rpm
- Mixing time: 48 hours
- Atmosphere: Ar atmosphere
- Specimen amount: less than or equal to 1 g

Examples of the method of crystallizing include, for example, heat treatment the vitrified specimen at a temperature higher than or equal to the first crystallization temperature of the specimen. Whether or not the specimen is crystallized is able to be confirmed by performing X-ray diffraction measurement to detect a peak.

The temperature at which the heat treatment is performed is not particularly limited as long as the temperature is at or above the first crystallization temperature of the solid electrolyte and may be appropriately selected in accordance with the purpose. For example, the temperature is preferably higher than or equal to 200°C and lower than or equal to 600°C, and more preferably, higher than or equal to 300°C and lower than or equal to 600°C.

Heat treatment time is not particularly limited and may be appropriately selected in accordance with the purpose. For example, the heat treatment time is preferably longer than or equal to one minute and shorter than or equal to twelve hours and, more preferably, longer than or equal to one hour and shorter than or equal to three hours.

## Claims

1. A crystalline solid electrolyte which includes

   $Li_3PO_4$, $Li_4SiO_4$, and $Li_3BO_3$, wherein
   content of the $Li_3PO_4$ is less than or equal to 75 mole%, based on the whole crystalline solid electrolyte.

2. The crystalline solid electrolyte according to claim 1, wherein

   the content of the $Li_3PO_4$ is $100 \times (2/\sqrt{3})y$ (mole%), and
   in a relationship with x ($0 \leq x \leq 1$), y satisfies

   (1) $0 \leq y \leq \sqrt{3}x$ in a case where $0 \leq x < 0.287$,
   (2) $0 \leq y \leq 42.857x^4 - 70.269x^3 + 45.484x^2 - 13.749x + 2.0681$ in a case where $0.287 \leq x \leq 0.630$, and
   (3) $0 \leq y \leq -\sqrt{3}x + \sqrt{3}$ in a case where $0.630 < x \leq 1$,

   wherein x indicates a ratio of the $Li_3BO_3$ to a sum of the $Li_4SiO_4$ and the $Li_3BO_3$.

3. The crystalline solid electrolyte according to claim 1 or 2, wherein
   a crystallization temperature Tc of the crystalline solid electrolyte is lower than or equal to 600°C, the crystallization temperature Tc being measured by differential thermal analysis (DTA) according to the method of the description.

4. The crystalline solid electrolyte according to claim 3, wherein
   the crystallization temperature Tc is higher than or equal to 200°C and lower than or equal to 600°C.

5. The crystalline solid electrolyte according to claim 3 or 4, wherein
   the crystallization temperature Tc is higher than or equal to 300°C and lower than or equal to 600°C.

6. The crystalline solid electrolyte according to any one of claims 1 to 5, wherein
   the content of the $Li_3PO_4$ is less than or equal to 50 mole%.

7. The crystalline solid electrolyte according to any one of claims 1 to 6, wherein
   the content of the $Li_3PO_4$ is greater than or equal to 25 mole%.

8. The crystalline solid electrolyte according to any one of claims 1 to 7, wherein
total content of the $Li_3PO_4$, the $Li_4SiO_4$, and the $Li_3BO_3$ is greater than or equal to 95 mole%, based on the whole crystalline solid electrolyte.

9. The crystalline solid electrolyte according to any one of claims 1 to 8, wherein
a degree of crystallinity of the crystalline solid electrolyte measured by an X-ray crystal diffraction method according to the method of the description is higher than or equal to 80%.

10. A method of producing a crystalline solid electrolyte, the method comprising:

mixing $Li_3PO_4$, $Li_4SiO_4$, and $Li_3BO_3$ such that content of the $Li_3PO_4$ is less than or equal to 75 mole%, based on the whole crystalline solid electrolyte; and
crystallizing the $Li_3PO_4$, the $Li_4SiO_4$, and the $Li_3BO_3$.

11. The method according to claim 10, wherein

the content of the $Li_3PO_4$ is $100 \times (2/\sqrt{3})y$ (mole%), and
in a relationship with x ($0 \leq x \leq 1$), y satisfies

(1) $0 \leq y \leq \sqrt{3}x$ in a case where $0 \leq x < 0.287$,
(2) $0 \leq y \leq 42.857x^4 - 70.269x^3 + 45.484x^2 - 13.749x + 2.0681$ in a case where $0.287 \leq x \leq 0.630$, and
(3) $0 \leq y \leq -\sqrt{3}x + \sqrt{3}$ in a case where $0.630 < x \leq 1$,

wherein x indicates a ratio of the $Li_3BO_3$ to a sum of the $Li_4SiO_4$ and the $Li_3BO_3$.

12. The method according to claim 10 or 11, wherein
the crystallizing includes heat treatment at a temperature higher than or equal to 200°C and lower than or equal to 600°C.

13. The method according to claim 12, wherein
the crystallizing includes heat treatment at a temperature higher than or equal to 300°C and lower than or equal to 600°C.

**Patentansprüche**

1. Kristalliner Festelektrolyt, der Folgendes beinhaltet

$Li_3PO_4$, $Li_4SiO_4$, und $Li_3BO_3$, wobei
der Gehalt des $Li_3PO_4$ kleiner oder gleich 75 Mol% ist, basierend auf dem gesamten kristallinen Festelektrolyten.

2. Kristalliner Festelektrolyt nach Anspruch 1, wobei

der Gehalt des $Li_3PO_4$ $100 * (2/\sqrt{3})y$ (Mol%) beträgt, und
in einer Beziehung mit x ($0 \leq x \leq 1$), y Folgendes erfüllt

(1) $0 \leq y \leq \sqrt{3}x$, falls $0 < x < 0,287$,
(2) $0 \leq y \leq 42,857x^4 - 70,269x^3 + 45,484x^2 - 13,749x + 2,0681$, falls $0,287 < x < 0,630$, und
(3) $0 \leq y \leq -\sqrt{3}x + \sqrt{3}$, falls $0,630 < x \leq 1$,

wobei x ein Verhältnis des $Li_3BO_3$ zu einer Summe aus dem $Li_4SiO_4$ und dem $Li_3BO_3$ angibt.

3. Kristalliner Festelektrolyt nach Anspruch 1 oder 2, wobei
eine Kristallisierungstemperatur Tc des kristallinen Festelektrolyten niedriger oder gleich 600 °C ist, wobei die Kristallisierungstemperatur Tc durch Differenz-Thermoanalyse (DTA) gemäß dem Verfahren der Beschreibung gemessen wird.

4. Kristalliner Festelektrolyt nach Anspruch 3, wobei

eine Kristallisierungstemperatur Tc höher oder gleich 200 °C und niedriger oder gleich 600 °C ist.

5. Kristalliner Festelektrolyt nach Anspruch 3 oder 4, wobei
eine Kristallisierungstemperatur Tc höher oder gleich 300 °C und niedriger oder gleich 600 °C ist.

6. Kristalliner Festelektrolyt nach einem der Ansprüche 1 bis 5, wobei
der Gehalt des $Li_3PO_4$ kleiner oder gleich 50 Mol% ist.

7. Kristalliner Festelektrolyt nach einem der Ansprüche 1 bis 6, wobei
der Gehalt des $Li_3PO_4$ größer oder gleich 25 Mol% ist.

8. Kristalliner Festelektrolyt nach einem der Ansprüche 1 bis 7, wobei
der Gesamtgehalt des $Li_3PO_4$, des $Li_4SiO_4$, und des $Li_3BO_3$ größer oder gleich 95 Mol% ist, basierend auf dem gesamten kristallinen Festelektrolyten.

9. Kristalliner Festelektrolyt nach einem der Ansprüche 1 bis 8, wobei
ein Kristallisierungsgrad des kristallinen Festelektrolyten, durch ein Kristallstrukturbestimmungsverfahren durch Röntgenbeugung gemäß dem Verfahren der Beschreibung gemessen, höher oder gleich 80% ist.

10. Verfahren zum Herstellen eines kristallinen Festelektrolyten, wobei das Verfahren Folgendes umfasst:

Mischen von $Li_3PO_4$, $Li_4SiO_4$, und $Li_3BO_3$ derart, dass der Gehalt des $Li_3PO_4$ kleiner oder gleich 75 Mol% ist, basierend auf dem gesamten kristallinen Festelektrolyten; und
Kristallisieren des $Li_3PO_4$, des $Li_4SiO_4$, und des $Li_3BO_3$.

11. Verfahren nach Anspruch 10, wobei

der Gehalt des $Li_3PO_4$ 100 * (2/√3)y (Mol%) beträgt, und
in einer Beziehung mit x ($0 \leq x \leq 1$), y Folgendes erfüllt

(1) $0 \leq y \leq \sqrt{3}xn$, falls $0 \leq x < 0,287$,
(2) $0 \leq y \leq 42,857x^4 - 70,269x^3 + 45,484x^2 - 13,749x + 2,0681$, falls $0,287 \leq x \leq 0,630$, und
(3) $0 \leq y \leq -\sqrt{3}x + \sqrt{3}$, falls $0,630 < x \leq 1$,

wobei x ein Verhältnis des $Li_3BO_3$ zu einer Summe aus dem $Li_4SiO_4$ und dem $Li_3BO_3$ angibt.

12. Verfahren nach Anspruch 10 oder 11, wobei
die Kristallisierung Hitzebehandlung bei einer Temperatur höher oder gleich 200 °C und niedriger oder gleich 600 °C beinhaltet.

13. Verfahren nach Anspruch 12, wobei
die Kristallisierung Hitzebehandlung bei einer Temperatur höher oder gleich 300 °C und niedriger oder gleich 600 °C beinhaltet.

**Revendications**

1. Électrolyte solide cristallin qui inclut

du $Li_3PO_4$, du $Li_4SiO_4$ et du $Li_3BO_3$, dans lequel
la teneur en $Li_3PO_4$ est inférieure ou égale à 75 % en mole, sur la base de l'électrolyte solide cristallin entier.

2. Électrolyte solide cristallin selon la revendication 1, dans lequel

la teneur en $Li_3PO_4$ est de 100 * (2/√3)y (% en mole), et
dans une relation avec x ($0 \leq x \leq 1$), y satisfait

(1) $0 \leq y \leq \sqrt{3}x$ dans un cas où $0 < x < 0,287$,

(2) $0 \leq y \leq 42{,}857x^4 - 70{,}269x^3 + 45{,}484x^2 - 13{,}749x + 2{,}0681$ dans un cas où $0{,}287 < x < 0{,}630$, et

(3) $0 \leq y \leq -\sqrt{3}x + V3$ dans un cas où $0{,}630 < x \leq 1$,

dans lequel x indique un rapport du $Li_3BO_3$ sur une somme du $Li_4SiO_4$ et du $Li_3BO_3$.

**3.** Électrolyte solide cristallin selon la revendication 1 ou 2, dans lequel
une température de cristallisation Tc de l'électrolyte solide cristallin est inférieure ou égale à 600 °C, la température de cristallisation Tc étant mesurée par une analyse thermique différentielle (DTA) selon le procédé de la description.

**4.** Électrolyte solide cristallin selon la revendication 3, dans lequel
la température de cristallisation Tc est supérieure ou égale à 200 °C et inférieure ou égale à 600 °C.

**5.** Électrolyte solide cristallin selon la revendication 3 ou 4, dans lequel
la température de cristallisation Tc est supérieure ou égale à 300 °C et inférieure ou égale à 600 °C.

**6.** Électrolyte solide cristallin selon l'une quelconque des revendications 1 à 5, dans lequel
la teneur en $Li_3PO_4$ est inférieure ou égale à 50 % en mole.

**7.** Électrolyte solide cristallin selon l'une quelconque des revendications 1 à 6, dans lequel
la teneur en $Li_3PO_4$ est supérieure ou égale à 25 % en mole.

**8.** Électrolyte solide cristallin selon l'une quelconque des revendications 1 à 7, dans lequel
la teneur totale en $Li_3PO_4$, $Li_4SiO_4$ et $Li_3BO_3$ est supérieure ou égale à 95 % en mole, sur la base de l'électrolyte solide cristallin entier.

**9.** Électrolyte solide cristallin selon l'une quelconque des revendications 1 à 8, dans lequel
un degré de cristallinité de l'électrolyte solide cristallin mesuré par un procédé de diffraction de cristal à rayons X selon le procédé de la description est supérieur ou égal à 80 %.

**10.** Procédé de production d'un électrolyte solide cristallin, le procédé comprenant :

le mélange de $Li_3PO_4$, de $Li_4SiO_4$ et de $Li_3BO_3$ de telle sorte que la teneur en $Li_3PO_4$ est inférieure ou égale à 75 % en mole, sur la base de l'électrolyte solide cristallin entier ; et
la cristallisation du $Li_3PO_4$, du $Li_4SiO_4$ et du $Li_3BO_3$.

**11.** Procédé selon la revendication 10, dans lequel

la teneur en $Li_3PO_4$ est de 100 * (2/V3)y (% en mole), et
dans une relation avec x ($0 \leq x \leq 1$), y satisfait

(1) $0 \leq y \leq \sqrt{3}x$ dans un cas où $0 \leq x < 0{,}287$,
(2) $0 \leq y \leq 42{,}857x^4 - 70{,}269x^3 + 45{,}484x^2 - 13{,}749x + 2{,}0681$ dans un cas où $0{,}287 \leq x \leq 0{,}630$, et
(3) $0 \leq y \leq -\sqrt{3}x + V3$ dans un cas où $0{,}630 < x \leq 1$,

dans lequel x indique un rapport du $Li_3BO_3$ sur une somme du $Li_4SiO_4$ et du $Li_3BO_3$.

**12.** Procédé selon la revendication 10 ou 11, dans lequel
la cristallisation inclut un traitement thermique à une température supérieure ou égale à 200 °C et inférieure ou égale à 600 °C.

**13.** Procédé selon la revendication 12, dans lequel
la cristallisation inclut un traitement thermique à une température supérieure ou égale à 300 °C et inférieure ou égale à 600 °C.

# FIG. 1

$Li_3PO_4$

$Li_4SiO_4$

$Li_3BO_3$

# FIG. 2

EP 3 890 091 B1

# FIG. 3

# FIG. 4

EP 3 890 091 B1

# FIG. 5

# FIG. 6

# FIG. 7

# FIG. 8A

a1

b1

# FIG. 8B

a2

b2

EP 3 890 091 B1

# FIG. 9

$f_1(x) = \sqrt{3}x$

$f_2(x) = 42.857x^4 - 70.269x^3 + 45.484x^2 - 13.749x + 2.0681$

$f_3(x) = -\sqrt{3}x + \sqrt{3}$

**EP 3 890 091 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016192370 A

- JP 2017027867 A

**Non-patent literature cited in the description**

- **JANANI et al.** *RSC Adv.,* 2014, vol. 4, 51228-51238
- **SUMITA et al.** *Bull. Chem. Soc. Jpn.,* 2019, vol. 92, 1100-1106

- **TATSUMISAGO et al.** *Solid State Ionics,* 1996, vol. 86-88, 487-490